# EUROPEAN PATENT SPECIFICATION

(11) **EP 3 043 138 B1**
(45) Date of publication and mention of the grant of the patent: **22.05.2019**
(21) Application number: 16150245.5
(22) Date of filing: 05.01.2016
(51) Int. Cl.: F28F 3/02, B23H 1/00, B23P 15/26, F28D 9/00

(54) **HEAT EXCHANGER WITH FIN WAVE CONTROL**
WÄRMETAUSCHER MIT WELLENFÖRMIGER RIPPENSTRUKTUR.
ÉCHANGEUR DE CHALEUR À PLAQUES AVEC AILETTES ONDULÉES

(30) Priority: 07.01.2015 US 201514591285
(43) Date of publication of application: 13.07.2016
(73) Proprietor: Hamilton Sundstrand Corporation, Charlotte, NC 28217 (US)
(72) Inventor: ARMY, Jr., Donald E., Enfield, CT Connecticut 06082 (US); KAN, George, West Hartford, CT Connecticut 06117 (US); STEPHENS, Kurt L., Enfield, CT Connecticut 06082 (US); SPINETI, Michael, Newington, CT Connecticut 06111 (US); ZAGER, Michael, Windsor, CT Connecticut 06095 (US)
(74) Representative: Dehns

(56) References cited:
- EP-A1- 2 500 680
- GB-A- 2 067 736
- GB-A- 2 206 960
- JP-A- H07 159 074
- US-A1- 2005 274 501
- US-A1- 2013 299 144

## Description

### BACKGROUND

The subject matter disclosed herein generally relates to heat exchangers, and more specifically, to wave fin structure for heat exchangers JP H07 159074 A for instance discloses a heat exchanger as defined in the preamble of claim 1.

A typical air-to-air plate fin heat exchanger consists of a stack of brazed, thermally interconductive air flow sections or layers. Hot air and cold air are forced through alternate layers in order to exchange heat. In a gas turbine air conditioning system, the hot air comes from the engine bleed and flows through bleed layers. The cold air is outside air and flows through ram layers. These alternately stacked ram and bleed layers are joined together along a thermally conductive medium called the parting sheet, and heat from the bleed layers is transmitted through the parting sheets to the ram air flow.

The ram and bleed layers are similar and each includes an array of cooling fins and frames or closure bars which are positioned on the parting sheets to define each layer. Frames or closure bars are placed along the edges of the layers to support the ends of the parting sheets. In addition to supporting the ends of the parting sheets, theses bars close off each layer, except where there is an air inlet or an air outlet. At the air inlets and outlets the fins provide support for the parting sheets.

To fabricate the heat exchanger, the ram and bleed layers are stacked alternately one on top of another and then placed in a vacuum furnace for brazing. During the brazing process the stack is squeezed so as to force the layers together. The brazing is complete when the fins are brazed to the parting sheets and the edges of the sheets are uniformly brazed along the closure bars. The bleed and ram air flows are supplied from corresponding manifolds that are subsequently welded to the closure bars.

Due to their size, such heat exchangers may be subjected to significant thermal stresses when they warm up and cool down. These stresses may occur when the bleed air flow is started and stopped. During these heating and cooling cycles of the exchanger, the core expands and contracts. Over time, the high thermal stresses may degrade the fins thereby causing fractures that may lead to the deterioration of sections of the core. This may compromise the structural integrity of the heat exchanger and its ability to provide the required cooling performance.

### BRIEF SUMMARY

In one aspect, a plate fin heat exchanger is provided. The plate fin heat exchanger includes a plurality of finned cold layers configured to conduct a first fluid, and a plurality of finned warm layers configured to conduct a second fluid. The finned warm layers include an inlet side and an outlet side. A first portion of fins of at least one finned warm layer of the plurality of finned warm layers includes a plurality of aligned peaks and valleys defining a wave configuration for each fin of the first portion of fins. An upstream leading edge of the first portion of fins begins at a point of the wave configuration that is at least one of the peaks and valleys.

In addition to the features described above, the plurality of finned warm layers further comprises a second portion of fins disposed at the inlet side adjacent the upstream leading edge of the first portion of fins, wherein the fins of the second portion of fins have a thickness greater than a thickness of the fins of the first portion of fins. A slot is formed in a leading edge of at least one fin of the second portion of fins. As a preferred embodiment, the fins of the second portion of fins are between two and four times thicker than the fins of the first portion of fins.

Relevant to the invention is a dual core heat exchanger. The dual core heat exchanger includes a first core and a second core fluidly separate from the first core. The first core includes a first plurality of finned cold layers configured to conduct a first fluid, a first plurality of finned warm layers configured to conduct a second fluid, the first plurality of finned warm layers having an inlet side and an outlet side. At least a first portion of the fins of each finned warm layer of the first plurality of finned warm layers includes a plurality of aligned peaks and valleys defining a wave configuration for each fin of the first portion of fins. An upstream leading edge of the first portion of fins begins at a point of the wave configuration that is at least one of the peaks and valleys. The second core includes a second plurality of finned cold layers configured to conduct the first fluid and a second plurality of finned warm layers configured to conduct a third fluid. The second plurality of finned warm layers include an inlet side and an outlet side.

In addition to one or more of the features described above, or as an alternative, the core heat exchanger may include: wherein the first core further comprises a guard fin positioned at the inlet side of each of the finned wann layers of the first plurality of finned warm layers, wherein the guard fin has a fin thickness greater than a thickness of the fins of the first finned warm layers; a second guard fin positioned at the inlet side of each of the finned warm layers of the second plurality of finned warm layers, wherein the second guard fin has a fin thickness greater than a thickness of the fins of the second finned warm layers, wherein at least a second portion of the fins of each finned warm layer of the second plurality of finned warm layers includes a plurality of aligned peaks and valleys defining a wave configuration for each fin of the second portion of fins, wherein an upstream leading edge of the second portion of fins begins at a point of the wave configuration that is at least one of the peaks and valleys; a slot formed in a leading edge of the guard fin; wherein the guard fin is between two and four times thicker than the fins of the first plurality of finned warm layers; and/or a first inlet header fluidly coupled to the inlet side of the first plurality of finned warm layers, the first inlet header configured to supply bleed air from an engine to the first plurality of finned warm layers, a ram air manifold coupled to an inlet of the first plurality of finned cold layers, the ram air manifold configured to supply ram air to the first plurality of finned cold layers, and a second inlet header fluidly coupled to the inlet side of the second plurality of finned warm layers, the second inlet header configured to supply compressed air from a compressor to the second plurality of finned warm layers.

In yet another aspect, a method of fabricating a heat exchanger as defined in claim 3 is provided. The method includes providing a plurality of finned cold layers and providing a plurality of finned warm layers having an inlet side and an outlet side, wherein a first portion of fins of each finned warm layer includes a plurality of aligned peaks and valleys defining a wave configuration for each fin of the first portion of fins. The method further includes cutting along the aligned peaks and valleys of adjacent fins of the first portion of fins to form an upstream leading edge of the first portion of fins that begins at a point of the wave configuration that is at least one of the peaks and valleys, and coupling the plurality of finned cold layers and the plurality of finned warm layers.

The method further includes providing a plurality of guard fins having a fin thickness greater than a fin thickness of the fins of the finned warm layers, orienting guard fins of the plurality of guard fins at the inlet side of the finned warm layers of the plurality of finned warm layers, and wherein the step of coupling comprises coupling the plurality of finned cold layers, the plurality of finned warm layers, and the plurality of guard fins; forming a slot in a leading edge of at least one guard fin of the plurality of guard fins. As a preferred embodiment, the slot is formed using an electrical discharge machining process; and/or wherein the step of cutting along the aligned peaks and valleys of the wave configuration is performed using an electrical discharge machining process.

These and other advantages and features will become more apparent from the following description taken in conjunction with the drawings.

### BRIEF DESCRIPTION OF THE DRAWINGS

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:
FIG. 1 is a perspective view of an exemplary heat exchanger;
FIG. 2 is a perspective view of the heat exchanger shown in FIG. 1 with exemplary headers;
FIG. 3 is a cross-sectional view of the heat exchanger shown in FIG. 1 taken along line 3-3;
FIG. 4 is a cross-sectional view of an exemplary bleed guard fin of the heat exchanger shown in FIG. 3 and taken along line 4-4
FIG. 5 is a cross-sectional view of an alternative embodiment of the heat exchanger shown in FIG. 3;
FIG. 6 is an enlarged view of the heat exchanger shown in FIG. 5 and taken along section 6; and
FIG. 7 is an enlarged view of heat exchanger fins shown in FIGS. 5 and 6.

The detailed description explains embodiments of the invention, together with advantages and features, by way of example with reference to the drawings.

### DETAILED DESCRIPTION

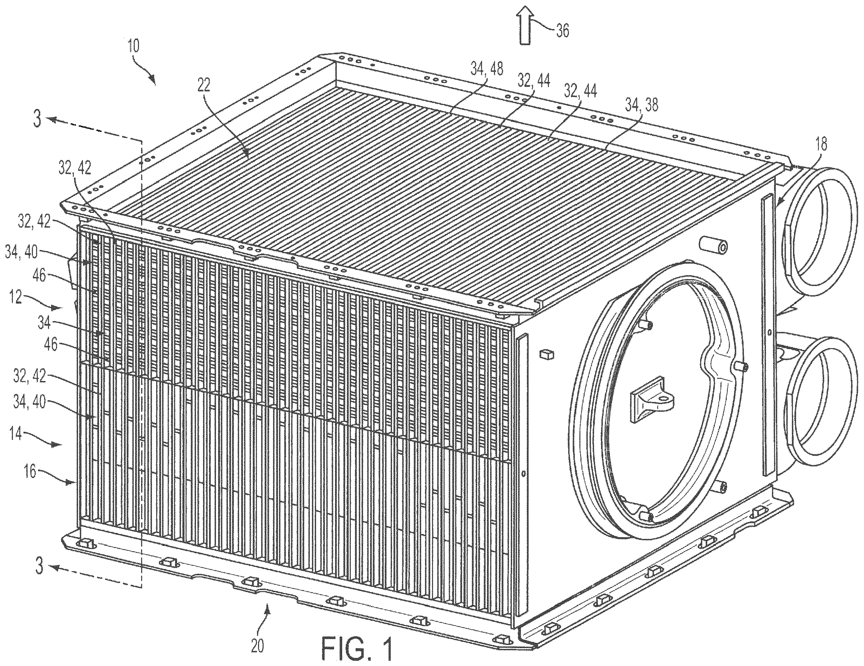

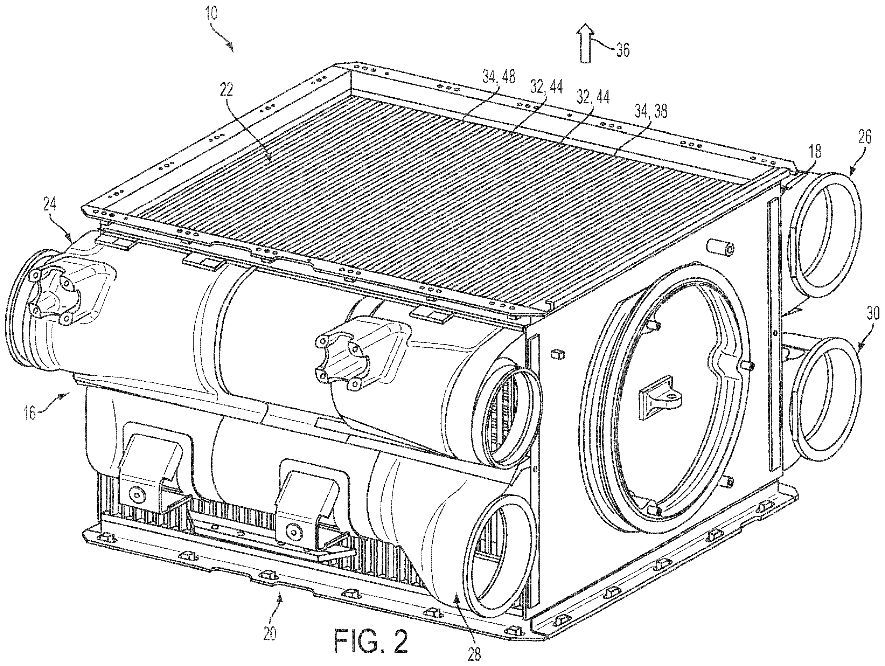

FIGS. 1 and 2 illustrate an exemplary air-to-air heat exchanger 10. In the exemplary embodiment, heat exchanger 10 is a high temperature aluminum dual heat exchanger for an air generation unit of an aircraft. However, the features described herein may be used with any suitable heat exchanger structure.

Heat exchanger 10 generally includes a primary core 12 and a secondary core 14. Each core 12, 14 includes a bleed air inlet side 16, a bleed air outlet side 18, a ram air inlet side 20, and a ram air outlet side 22. With reference to FIG. 2, hot bleed air from an engine (not shown) enters core 12 from a primary inlet header 24 and exits through a primary outlet header 26. Similarly, hot air from a compressor outlet enters secondary core 14 from a secondary inlet header 28 and exits through a secondary outlet header 30. Ram air passes from inlet 20 to outlet 22 through both primary core 12 and secondary core 14 to cool both the hot bleed air and the hot air from the compressor. The ram air may be supplied to inlet side 20 by a manifold or flow guidance device (not shown) and removed from outlet side 22 by a manifold or flow guidance device (not shown).

Heat exchanger 10 includes a plurality of layers defined by parting sheets 32 and cooling fins 34 that are located between parting sheets 32. Cold or ram air is forced through inlet 20 in the direction of arrow 36 and flows through a plurality of ram air layers 38. The ram air layers 38 are located between hot air or bleed layers 40, which receive hot air through headers 24, 28. The hot air flows through the inlets defined between bleed closure bars 42, which seal off bleed layer 40 with respect to the ram flow direction 36. Similarly, ram closure bars 44 seal off ram air layers with respect to the bleed flow.

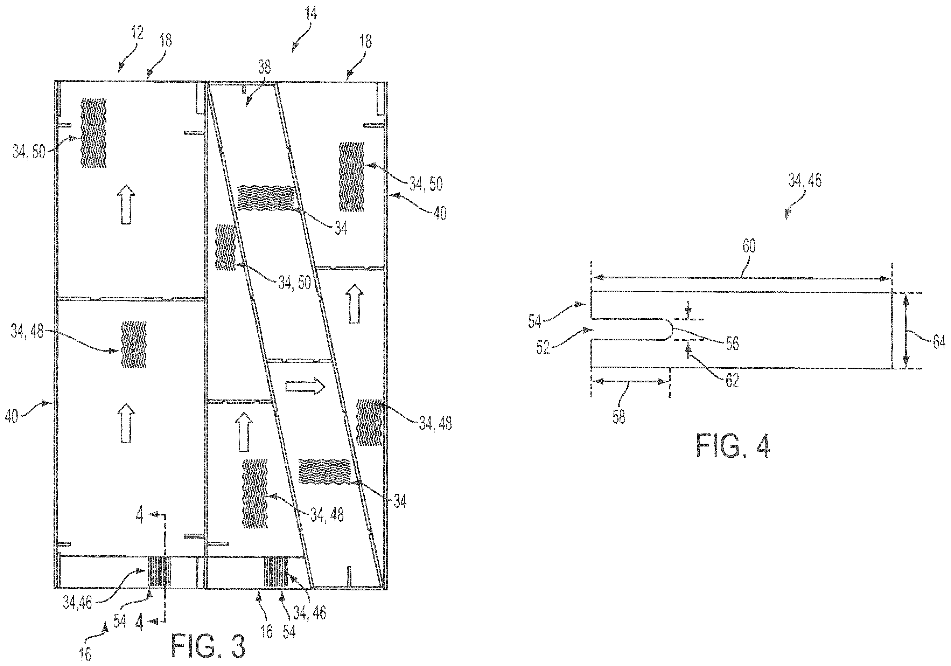

With reference to FIG. 3, cooling fins 34 have a varied thickness throughout the layers 38 and/or 40. For example, cooling fins 34 may include bleed guard fins 46, upstream fins 48, and downstream fins 50. In the exemplary embodiment, a thickness of guard fins 46 is greater than a thickness of upstream fins 48, which is greater than a thickness of downstream fins 50. Guard fins 46 are fabricated with a thickness greater than those of fins 48, 50 due in part to the bleed air being at its hottest temperature at bleed air inlet 16. Because of the increased thickness, guard fins 46 are better able to withstand the high thermal stresses such as expansion and contraction of adjacent closure bars 42, as well as expansion and contraction of individual guard fins 46. Accordingly, the thermal fatigue life of guard fins 46 is greatly increased.

Similarly, in the exemplary embodiment, upstream fins 48 are fabricated with a thickness greater than downstream fins 50 due in part because the bleed air is reduced in temperature as it travels from inlet 16 to outlet 18. Thus, the thermal stress on fins 34 decreases as the fins extend from inlet 16 to outlet 18, so the thickness of fins 34 may be reduced further downstream. Alternatively, upstream and downstream fins 48, 50 may have the same thickness while guard fins 46 are thicker. Guard fins 46 may be used in primary core 12 and/or secondary core 14. Moreover, in the exemplary embodiment illustrated in FIG. 3, guard fins 46 are straight or planar and fins 48, 50 are wavy, serrated, or offset. Alternatively, guard fins 46 may be wavy and fins 48, 50 may be straight.

In one embodiment, guard fins 46 are between 40% and 60% thicker than upstream fins 48 and between two and four times thicker than downstream fins 50. In another embodiment, guard fins 46 are between approximately 40% and approximately 60% thicker than upstream fins and between approximately two and approximately four times thicker than downstream fins 50. In one embodiment, guard fins 46 are 55% thicker than upstream fins 48 and three times thicker than downstream fins 50. In another embodiment, guard fins 46 are approximately 55% thicker than upstream fins 48 and approximately three times thicker than downstream fins 50.

In one embodiment, the thickness of guard fins 46 is between 0.008 inches and 0.01 inches. In another embodiment, the thickness of guard fins 46 is between approximately 0.008 inches and approximately 0.01 inches. In yet another embodiment, the thickness of guard fins 46 is 0.009 inches or approximately 0.009 inches. In one embodiment, the thickness of upstream fins 48 is between 0.004 inches and 0.006 inches. In another embodiment, the thickness of upstream fins 48 is between approximately 0.004 inches and approximately 0.006 inches. In yet another embodiment, the thickness of upstream fins 48 is 0.005 inches or approximately 0.005 inches. In one embodiment, the thickness of downstream fins 50 is between 0.002 inches and 0.004 inches. In another embodiment, the thickness of downstream fins 50 is between approximately 0.002 inches and approximately 0.004 inches. In yet another embodiment, the thickness of downstream fins 50 is 0.003 inches or approximately 0.003 inches. However, guard fins 46, upstream fins 48, and downstream fins 50 may have any thickness that enables the fins to function as described herein.

As illustrated in FIG. 4, guard fins 46 include a slot 52 formed in a leading edge 54 to facilitate compliance with the thermal growth of adjacent structure (e.g., closure bars 42). Slot 52 allows guard fin leading edge 54 to expands and contract during the rapid thermal changes on primary heat exchanger inlet 16 of primary core 12 and/or secondary core 14. In the exemplary embodiment, slot 52 includes a rounded end 56. However, slot end 56 may have any shape that enables guard fin 46 to function as described herein. In the exemplary embodiment, slot 52 is formed in leading edge 54 by electrical discharge machining. However, slot 52 may be formed using any suitable process.

In one embodiment, a slot depth 58 is between 20% and 40% of a fin length 60. In another embodiment, slot depth 58 is between approximately 20% and approximately 40% of fin length 60. In yet another embodiment, slot depth 58 is 30% or approximately 30% of fin length 60. In one embodiment, slot depth 58 is between 0.15 inches and 0.35 inches. In another embodiment, slot depth 58 is between approximately 0.15 inches and approximately 0.35 inches. In yet another embodiment, slot depth 58 is 0.25 inches or approximately 0.25 inches. In one embodiment, fin length 60 is between 0.8 inches and 1.0 inch. In another embodiment, fin length 60 is between approximately 0.8 inches and approximately 1.0 inch. In yet another embodiment, fin length 60 is 0.9 inches or approximately 0.9 inches.

In one embodiment, a slot width 62 is between 20% and 40% of a fin width 64. In another embodiment, slot width 62 is between approximately 20% and approximately 40% of fin width 64. In yet another embodiment, slot width is 30% or approximately 30% of fin width 64. In one embodiment, slot width 62 is between 0.05 inches and 0.07 inches. In another embodiment, slot width 62 is between approximately 0.05 inches and approximately 0.07 inches. In yet another embodiment, slot width 62 is 0.06 inches or approximately 0.06 inches. In one embodiment, fin width 64 is between 0.15 inches and 0.35 inches. In another embodiment, fin width 64 is between approximately 0.15 inches and approximately 0.35 inches. In yet another embodiment, fin width 64 is 0.25 inches or approximately 0.25 inches.

Heat exchanger 10 may be fabricated by stacking parting sheets 32 with closure bars 42, 44 and cooling fins 34 (including guard fins 46) in place. Weight is then applied to the layers so as to squeeze them together, and the assembly is then placed in a vacuum furnace where it is heated to a temperature at which parting sheets 32 become brazed to closure bars 42, 44 and fins 34. Slots 52 may then be formed in guard fin leading edges 54, for example by electric discharge machining. Headers 24, 26, 28, 30 are then attached to heat exchanger 10.

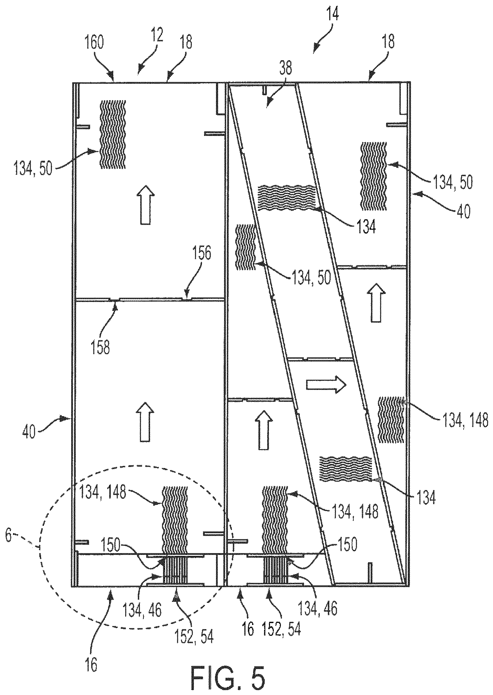

With reference to FIG. 5, another embodiment of heat exchanger 10 includes cooling fins 134, and like reference numerals indicate like parts. In the illustrated embodiment, cooling fins 134 include bleed guard fins 46, wavy upstream fins 148, and downstream fins 50. Upstream fins 148 include an upstream leading edge 150 disposed adjacent to and downstream of bleed guard fins 46 to define a gap 149 therebetween. Alternatively, cooling fins 134 may not include guard fins 46 such that upstream leading edge 150 is disposed at a heat exchanger leading edge 152 (i.e., where guard fin leading edge 54 would be positioned).

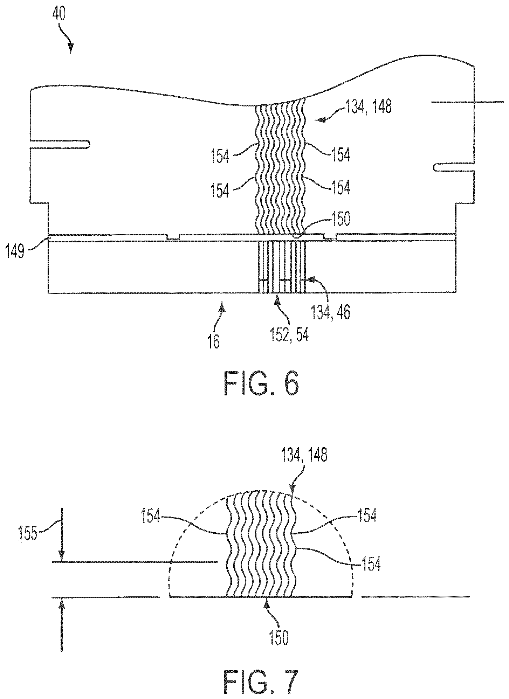

With further reference to FIGS. 6 and 7, each wave-like upstream fin 148 includes a plurality of peaks/valleys 154 that define a fin cycle 155 (FIG. 7). In one embodiment, wavy fins 148 may have a sinusoidal shape that defines each peak/valley 154. As shown in FIG. 7, the peaks/valleys 154 of adjacent fins 148 are aligned, and fins 148 include upstream leading edge 150 that is formed and begins at a point on fin cycle 155 (of each fin 148) that is either a peak or a valley 154.

In one embodiment, upstream fins 148 are uniformly cut or trimmed along commonly aligned peaks/valleys 154 using electrical discharge machining (EDM) to form upstream leading edge 150. Because leading edge 150 is formed at a peak/valley 154 of each fin 148, upstream fins 1448 are better able to withstand high thermal stresses. Accordingly, the thermal fatigue life of fins 148 is greatly increased. As such, aligning the peaks/valleys 154 of adjacent wavy fins 148 provides unexpected increased fin fatigue life. In one experiment, fatigue testing demonstrated that fin wave control with leading edge 150 beginning at the peaks/valleys 154 of each fin 148 increased the number of fatigue cycles of heat exchanger 10 by a significant amount. Inclusion of guard fins 46 also increased the number of fatigue cycles of heat exchanger 10. Accordingly, testing confirmed fin-crack initiation is directly related to the position of the fin wave at leading edge 150.

In other embodiments, a trailing edge 156 of wavy upstream fins 148 may be trimmed along peaks/valleys 154 to further increase fin fatigue life. Furthermore, downstream fins 50 may also have a wave-like configuration and include an upstream leading edge 158 and/or a trailing edge 160 that are formed or trimmed along the peaks and valleys of wavy downstream fins 50.

Cooling fins 134 may be formed with wavy upstream fins 148. A gage (not shown) may be used to align the individual wavy fins 148, and wavy fins 148 may be subsequently cut (e.g., by EDM) along aligned peaks/valleys 154 to form leading edge 150. As such, adjacent wavy fins 148 are aligned along the same point of fin cycle 155 to provide a uniform leading edge 150 (see FIG. 6) that increases the fatigue life of cooling fins 134. In some embodiments, cooling fins 134 may be provided with bleed guard fins 46 disposed upstream of leading edge 150 to further increase fatigue life of cooling fins 134. In other embodiments, cooling fins 134 may include edges 156, 158, and/or 160 that are similarly trimmed along the peaks/valleys of adjacent wavy fins.

Heat exchanger 10 may be fabricated by stacking parting sheets 32 with closure bars 42, 44 and cooling fins 134 in place. Weight is then applied to the layers so as to squeeze them together, and the assembly is then placed in a vacuum furnace where it is heated to a temperature at which parting sheets 32 become brazed to closure bars 42, 44 and fins 134. If guard fins 46 are included, slots 52 may then be formed in guard fin leading edges 54, for example by an EDM process. Headers 24, 26, 28, 30 are then attached to heat exchanger 10.

While the invention has been described in detail in connection with only a limited number of embodiments, it should be readily understood that the invention is not limited to such disclosed embodiments. Accordingly, the invention is not to be seen as limited by the foregoing description, but is only limited by the scope of the appended claims.

## Claims

1. A plate fin heat exchanger (10) comprising:
a plurality of finned cold layers configured to conduct a first fluid; and
a plurality of finned warm layers configured to conduct a second fluid, the finned warm layers having an inlet side and an outlet side,
wherein a first portion of fins (148) of at least one finned warm layer of the plurality of finned warm layers includes a plurality of aligned peaks and valleys (154) defining a wave configuration for each fin of the first portion of fins,
wherein an upstream leading edge (150) of the first portion of fins (148) begins at a point of the wave configuration that is at least one of the peaks and valleys (154), wherein the plurality of finned warm layers further comprises a second portion of fins disposed at the inlet side adjacent the upstream leading edge of the first portion of fins, wherein the fins of the second portion of fins have a thickness greater than a thickness of the fins of the first portion of fins, and **characterized by** further comprising a slot (52) formed in a leading edge of at least one fin of the second portion of fins.

2. The plate fin heat exchanger of claim 1, wherein the fins of the second portion of fins are between two and four times thicker than the fins of the first portion of fins.

3. A method of fabricating a heat exchanger (10), the method comprising:
providing a plurality of finned cold layers;
providing a plurality of finned warm layers having an inlet side and an outlet side, wherein a first portion of fins of each finned warm layer includes a plurality of aligned peaks and valleys defining a wave configuration for each fin of the first portion of fins;
cutting along the aligned peaks and valleys (154) of adjacent fins of the first portion of fins to form an upstream leading edge (150) of the first portion of fins (148) that begins at a point of the wave configuration that is at least one of the peaks and valleys (154); and
coupling the plurality of finned cold layers and the plurality of finned warm layers, further comprising:
providing a plurality of guard fins (46) having a fin thickness greater than a fin thickness of the fins of the finned warm layers;
orienting guard fins of the plurality of guard fins at the inlet side of the finned warm layers of the plurality of finned warm layers; and
wherein the step of coupling comprises coupling the plurality of finned cold layers, the plurality of finned warm layers, and the plurality of guard fins, and **characterized by** the method further comprising forming a slot (52) in a leading edge of at least one guard fin of the plurality of guard fins.

4. The method of claim 3, wherein the slot is formed using an electrical discharge machining process.

5. The method of claims 3 or 4, wherein the step of cutting along the aligned peaks and valleys of the wave configuration is performed using an electrical discharge machining process.

## Patentansprüche

1. Rippenplatten-Wärmetauscher (10), umfassend:
eine Vielzahl von gerippten kalten Schichten, die konfiguriert ist, um ein erstes Fluid zu leiten; und
eine Vielzahl von gerippten warmen Schichten, die konfiguriert ist, um ein zweites Fluid zu leiten, wobei die gerippten warmen Schichten eine Einlassseite und eine Auslassseite aufweisen,
wobei ein erster Abschnitt von Rippen (148) von zumindest einer gerippten warmen Schicht aus der Vielzahl von gerippten warmen Schichten eine Vielzahl von ausgerichteten Erhöhungen und Vertiefungen (154) beinhaltet, die eine Wellenkonfiguration für jede Rippe des ersten Abschnitts von Rippen definiert,
wobei eine stromaufwärtige Vorderkante (150) des ersten Abschnitts von Rippen (148) an einem Punkt der Wellenkonfiguration beginnt, der zumindest eine der Erhöhungen und Vertiefungen (154) ist, wobei die Vielzahl von gerippten warmen Schichten ferner einen zweiten Abschnitt von Rippen umfasst, der an der Einlassseite benachbart zu der stromaufwärtigen Vorderkante des ersten Abschnitts von Rippen angeordnet ist, wobei die Rippen des zweiten Abschnitts von Rippen eine Dicke aufweisen, die größer als eine Dicke der Rippen des ersten Abschnitts von Rippen ist, und **dadurch gekennzeichnet, dass** er ferner einen Schlitz (52) umfasst, der in einer Vorderkante von zumindest einer Rippe des zweiten Abschnitts von Rippen gebildet ist.

2. Rippenplatten-Wärmetauscher nach Anspruch 1, wobei die Rippen des zweiten Abschnitts von Rippen zwischen zwei- und viermal dicker als die Rippen des ersten Abschnitts von Rippen sind.

3. Verfahren zur Herstellung eines Wärmetauschers (10), wobei das Verfahren Folgendes umfasst:
Bereitstellen einer Vielzahl von gerippten kalten Schichten; Bereitstellen einer Vielzahl von gerippten warmen Schichten, die eine Einlassseite und eine Auslassseite aufweist, wobei ein erster Abschnitt von Rippen von jeder gerippten warmen Schicht eine Vielzahl von ausgerichteten Erhöhungen und Vertiefungen beinhaltet, die eine Wellenkonfiguration für jede Rippe des ersten Abschnitts von Rippen definiert;
Schneiden entlang der ausgerichteten Erhöhungen und Vertiefungen (154) von benachbarten Rippen des ersten Abschnitts von Rippen, um eine stromaufwärtige Vorderkante (150) des ersten Abschnitts von Rippen (148) zu bilden, die an einem Punkt der Wellenkonfiguration beginnt, der zumindest eine der Erhöhungen und Vertiefungen (154) ist; und
Koppeln der Vielzahl von gerippten kalten Schichten und der Vielzahl von gerippten warmen Schichten, ferner umfassend:
Bereitstellen einer Vielzahl von Schutzrippen (46), die eine Rippendicke aufweist, die größer als eine Rippendicke der Rippen der gerippten warmen Schichten ist;
Ausrichten von Schutzrippen aus der Vielzahl von Schutzrippen an der Einlassseite der gerippten warmen Schichten aus der Vielzahl von gerippten warmen Schichten; und
wobei der Schritt des Koppelns das Koppeln der Vielzahl von gerippten kalten Schichten, der Vielzahl von gerippten warmen Schichten und der Vielzahl von Schutzrippen umfasst und **dadurch gekennzeichnet, dass** das Verfahren ferner das Bilden eines Schlitzes (52) in einer Vorderkante von zumindest einer Schutzrippe aus der Vielzahl von Schutzrippen umfasst.

4. Verfahren nach Anspruch 3, wobei der Schlitz unter Anwendung eines Bearbeitungsprozesses mit elektrischer Entladung gebildet wird.

5. Verfahren nach Anspruch 3 oder 4, wobei der Schritt des Schneidens entlang der ausgerichteten Erhöhungen und Vertiefungen der Wellenkonfiguration unter Anwendung eines Bearbeitungsprozesses mit elektrischer Entladung durchgeführt wird.

## Revendications

1. Echangeur de chaleur à plaques avec ailettes (10) comprenant :
une pluralité de couches froides à ailettes configurées pour conduire un premier fluide ; et
une pluralité de couches chaudes à ailettes configurées pour conduire un second fluide, les couches chaudes à ailettes ayant un côté admission et un côté refoulement,
dans lequel une première portion d'ailettes (148) d'au moins une couche chaude à ailettes de la pluralité de couches chaudes à ailettes inclut une pluralité de crêtes et creux alignés (154) définissant une configuration d'onde pour chaque ailette de la première portion d'ailettes,
dans lequel un bord d'attaque amont (150) de la première portion d'ailettes (148) commence en un point de la configuration d'onde qui est au moins l'un des creux et crêtes (154), dans lequel la pluralité de couches chaudes à ailettes comprend en outre une seconde portion d'ailettes disposée du côté admission adjacent au bord d'attaque amont de la première portion d'ailettes, dans lequel les ailettes de la seconde portion d'ailettes ont une épaisseur plus grande qu'une épaisseur des ailettes de la première portion d'ailettes, et **caractérisé en ce qu'**il comprend en outre une fente (52) formée dans un bord d'attaque d'au moins une ailette de la seconde portion d'ailettes.

2. Echangeur de chaleur à plaques avec ailettes selon la revendication 1, dans lequel les ailettes de la seconde portion d'ailettes sont entre deux et quatre fois plus épaisses que les ailettes de la première portion d'ailettes.

3. Procédé de fabrication d'un échangeur de chaleur (10), le procédé comprenant :
la fourniture d'une pluralité de couches froides à ailettes ;
la fourniture d'une pluralité de couches chaudes à ailettes ayant un côté admission et un côté refoulement, dans lequel une première portion d'ailettes de chaque couche chaude à ailettes inclut une pluralité de crêtes et creux alignés définissant une configuration d'onde pour chaque ailette de la première portion d'ailettes ;
la découpe le long des crêtes et creux alignés (154) d'ailettes adjacentes de la première portion d'ailettes pour former un bord d'attaque amont (150) de la première portion d'ailettes (148) qui commence en un point de la configuration d'onde qui est au moins l'un des crêtes et creux (154) ; et
le couplage de la pluralité de couches froides à ailettes et de la pluralité de couches chaudes à ailettes, comprenant en outre :
la fourniture d'une pluralité d'ailettes de garde (46) ayant une épaisseur d'ailette plus grande qu'une épaisseur d'ailette des ailettes des couches chaudes à ailettes ;
l'orientation d'ailettes de garde de la pluralité d'ailettes de garde du côté admission des couches chaudes à ailettes de la pluralité de couches chaudes à ailettes ; et
dans lequel l'étape de couplage comprend le couplage de la pluralité de couches froides à ailettes, de la pluralité de couches chaudes à ailettes, et de la pluralité d'ailettes de garde, et **caractérisé en ce que** le procédé comprend en outre la formation d'une fente (52) dans un bord d'attaque d'au moins une ailette de garde de la pluralité d'ailettes de garde.

4. Procédé selon la revendication 3, dans lequel la fente est formée à l'aide d'un processus d'usinage par électro-érosion.

5. Procédé selon les revendications 3 ou 4, dans lequel l'étape de découpe le long des crêtes et creux alignés de la configuration d'onde est réalisée à l'aide d'un processus d'usinage par électro-érosion.
